# EUROPÄISCHE PATENTSCHRIFT

(11) **EP 0 541 585 B1**
(45) Veröffentlichungstag und Bekanntmachung des Hinweises auf die Patenterteilung: **19.01.1994**
(21) Anmeldenummer: 91912844.7
(22) Anmeldetag: 15.07.1991
(51) Int. Cl.: F01N 3/20, F01N 3/28, B01J 35/04, B01D 53/36

(54) **ELEKTRISCH BEHEIZBARER WABENKÖRPER, INSBESONDERE KATALYSATOR-TRÄGERKÖRPER, MIT INNEREN TRAGSTRUKTUREN**
ELECTRICALLY HEATED HONEYCOMB BODY, IN PARTICULAR A CATALYTIC CONVERTER BODY, WITH INTERNAL SUPPORT STRUCTURES
CORPS EN NID D'ABEILLES A CHAUFFAGE ELECTRIQUE, NOTAMMENT CORPS DE SUPPORT DE CATALYSEUR, A STRUCTURES INTERNES DE SUPPORT

(30) Priorität: 30.07.1990 WO PCT/EP90/01242
(43) Veröffentlichungstag der Anmeldung: 19.05.1993
(73) Patentinhaber: Emitec Gesellschaft für Emissionstechnologie mbH, 53797 Lohmar (DE)
(72) Erfinder: SWARS, Helmut, D-5060 Bergisch Gladbach 1 (DE)
(74) Vertreter: Kahlhöfer, Hermann, Dipl.-Phys.
(86) Internationale Anmeldenummer: EP9101328
(87) Internationale Veröffentlichungsnummer: WO9202714

(56) Entgegenhaltungen:
- EP-A- 0 245 737
- WO-A-89/07488
- WO-A-89/10470

## Beschreibung

Die vorliegende Erfindung betrifft einen elektrisch leitfähigen und daher beheizbaren Wabenkörper, wie er insbesondere zur Verringerung des Schadstoffausstoßes in der Kaltstartphase eines Otto-Motors in Kraftfahrzeugen eingesetzt werden kann.

Ein solcher Wabenkörper ist beispielsweise aus der WO 89/10470 oder der WO 89/10471 bekannt. Insbesondere zeigen diese Schriften Ausführungsbeispiele mit S-förmig verschlungenen Blechstapeln (auch als gegensinnig verschlungen bezeichnet), bei denen die elektrische Kontaktierung über äußere Halbschalen erfolgt. Diese Art der Kontaktierung führt, wie sich gezeigt hat, bei Beaufschlagung des Wabenkörpers mit hohen elektrischen Strömen zu einer nicht ganz gleichmäßigen Verteilung dieser Ströme über den Wabenkörper. Auch ist die mechanische Stabilität bei hohen Betriebsbelastungen nicht immer zufriedenstellend, da die im Inneren des Wabenkörpers vorhandenen elektrisch isolierenden Schichten keine beliebigen mechanischen Belastungen aufnehmen können. In den Dokumenten ist weiter auch eine Wabenkörperform beschrieben, bei der alle Bleche U-förmig an einer inneren Tragwand befestigt sind. Diese Tragwand besteht aus elektrisch leitfähigen Abschnitten unterbrochen durch elektrisch nicht leitfähige Abschnitte. Dies führt dazu, daß die Tragwand, die in ihrer Grundsubstanz hauptsächlich aus elektrisch nicht leitfähigem Material, z. B. Keramik, besteht, keine beliebigen mechanischen Zugkräfte aufnehmen kann und die Anbindung an ein metallisches Mantelrohr problematisch ist.

Für das Verständnis der vorliegenden Erfindung und als Stand der Technik sind weiterhin die EP-Bl-0 245 737 und die EP-Bl-0 245 738 von Bedeutung, da in diesen Schriften die typischen Vorteile von Wabenkörpern aus gegensinnig verschlungenen Blechstapeln bzw. Wabenkörpern mit inneren Tragwänden beschrieben sind.

Ausgehend von diesem Stand der Technik ist es Aufgabe der vorliegenden Erfindung einen elektrisch leitfähigen Wabenkörper zu schaffen, welcher mechanisch besonders stabil und einfach herzustellen ist und der gleichzeitig eine gleichmäßige Beaufschlagung des ganzen Wabenkörpers mit elektrischem Strom zuläßt, wobei der elektrische Widerstand des Wabenkörpers gegenüber herkömmlichen monolithischen Wabenkörpern erhöht und der elektrische Widerstand durch einfache konstruktive Maßnahmen oder die Dimensionierung einiger Teile in weiten Grenzen eingestellt werden kann.

Zur Lösung dieser Aufgabe dient ein Wabenkörper mit zwei Stirnseiten, aufgebaut aus lagenweise angeordneten, zumindest teilweise strukturierten Blechen, die eine Vielzahl von für ein Fluid durchströmbaren Kanälen bilden, welche von der einen Stirnseite zur anderen verlaufen, wobei
der Wabenkörper durch ein oder mehrere in Richtung von einer Stirnseite zur anderen verlaufende flächige Spalte und/oder elektrisch isolierende Schichten so unterteilt ist, daß in jedem Querschnittsbereich die elektrische Leitfähigkeit des Wabenkörpers verringert ist, sich jedoch mindestens ein gewundener elektrisch zusammenhängender leitfähiger, in der Querschnittsebene verlaufender Strompfad ergibt, dadurch gekennzeichnet, daß die Bleche gehaltert sind an zumindest teilweise im inneren des Wabenkörpers verlaufenden, hauptsächlich metallischen Tragstrukturen, welche zumindest abschnittsweise parallel zu den elektrisch isolierenden Spalten und/oder Schichten bzw. innerhalb derselben verlaufen und
die Tragstrukturen gleichzeitig als Stabilisatoren der Spalte und/oder als Träger der elektrisch isolierenden Schichten ausgebildet sind.

Durchgehende metallische Tragstrukturen, welche in das Innere des Wabenkörpers ragen, ermöglichen eine stabile, mechanisch belastbare Aufhängung aller Bleche, wobei durch geeignete Dimensionierung der Tragstrukturen und entsprechend gewählte Kontaktierung mit den Blechen gleichzeitig eine gleichmäßigere Verteilung eines elektrischen Stroms in dem Wabenkörper im Falle des Anlegens einer Spannung erreicht werden kann. Während sich bei einer Kontaktierung nach dem Stand der Technik der elektrische Strom einen möglichst kurzen Weg durch den Wabenkörper sucht, was bei gebogenen Blechlagen zu einer stärkeren Beaufschlagung der jeweils inneren Bahnen führt, kann dies durch gezielte Kontaktierung der Bleche mit den Tragstrukturen weitgehend ausgeglichen werden.

Günstig ist ein Aufbau, bei dem ein erster Teil der Tragstrukturen elektrisch gut leitend untereinander und mit einem ersten Anschlußkontakt verbunden ist und ein zweiter Teil der Tragstrukturen elektrisch gut leitend untereinander und mit einem zweiten Anschlußkontakt verbunden ist wobei der erste Teil der Tragstrukturen nur über mindestens einen durch die Bleche verlaufenden Strompfad mit dem zweiten Teil der Tragstrukturen elektrisch leitend verbunden ist. Wie anhand der Zeichnung näher erläutert wird, hat die gleichzeitige mechanische und elektrische Funktion der Tragstrukturen besondere Vorteile für die vorliegende Erfindung.

Der praktisch nur an den Tragstrukturen hängende Wabenkörper kann innerhalb eines Mantelrohres, aber von diesem elektrisch isoliert angeordnet werden, wobei die Bleche nur über die Tragstrukturen mit dem Mantelrohr verbunden sind. Zwar ist es prinzipiell auch bei der vorliegenden Erfindung möglich, das Mantelrohr mit einer der elektrischen Zuleitungen leitend zu verbinden, jedoch ist es für eine größere Freiheit bei der späteren Einbindung in ein elektrisches Versorgungssystem besonders vorteilhaft, wenn keine elektrische Verbindung zum Mantelrohr besteht. Dieses dient dann nur als Schutzhülle und tragendes Verbindungselement beispielsweise zu den übrigen Teilen eines Abgassystems bei einem Kraftfahrzeug.

Dementsprechend ist es vorteilhaft, wenn die Tragstrukturen elektrisch isoliert durcn das Mantelrohr hindurchgeführt und/oder an diesem, vorzugsweise formschlüssig, befestigt sind. Dabei können die nach außen geführten Tragstrukturen direkt als Anschlußkontakte ausgebildet sein, beispielsweise mit der Möglichkeit zum Anschrauben oder Aufstecken von für hohe Ströme ausgelegten Zuleitungen.

Besonders günstige Eigenschaften entfaltet die vorliegende Erfindung bei Wabenkörpern, in denen die Bleche im wesentlichen in einem oder mehreren etwa S-förmig gebogenen Stapel(n) angeordnet sind. Dabei wird unter S-förmig die nach dem Stand der Technik als gegensinnig verschlungen bekannte Form verstanden, die zumindest in ihrem Innenbereich immer einem S gleicht. Mit dieser Form lassen sich sehr unterschiedliche Querschnitte, insbesondere runde, ovale oder elliptische Querschnitte auf fertigungstechnisch günstige Weise ausfüllen und durch die Dicke der Blechstapel und elektrisch isolierende Zwischenschichten praktisch beliebige gewünschte elektrische Widerstände einstellen. Bei der vorliegenden Erfindung wird jedoch bevorzugt als besonders günstig eine Abwandlung der bekannten S-Formen verwendet, bei der die Blechlagen nicht zum Umfang hinlaufen, sondern in sich stärker zurückgebogen sind und an inneren Tragstukturen enden. Dies ist fertigungstechnisch in bestimmten Fällen von Vorteil, jedoch ist die Erfindung nicht auf diese spezielle Ausführungsform beschränkt. Prinzipiell braucht der Stapel auch nicht aus einzelnen Blechen zu bestehen, sondern kann aus einem in sich geschlossenen, S-förmig verschlungenen Wickel bestehen, wie dies beispielsweise in der DE-C2-38 09 105 beschrieben ist.

Entsprechend dem S-förmigen Verlauf der Bleche ist es günstig, elektrisch isolierende Spalte und/oder Schichten so anzuordnen, daß ein sich ergebender Strompfad im wesentlichen einfach oder mehrfach etwa S-förmig dem oder den Stapel(n) der Bleche folgt.

Auf diese Weise läßt sich durch die Dimensionierung des Blechstapels und die Zahl der S-förmigen Umläufe der elektrische Widerstand in weiten Grenzen für den jeweiligen Anwendungszweck günstig einstellen.

Mechanisch besonders günstig ist es, wenn die an den Tragstrukturen befestigten Bleche im Inneren des Wabenkörpers an den Tragstrukturen befestigt sind bzw. in diese übergehen, vorzugsweise unter von 90° verschiedenen Winkeln. Prinzipiell brauchen die Tragstrukturen nicht überall separate Bleche zu sein, sondern die Tragstrukturen können z. B. auch ganz oder teilweise aus verlängerten und zu einem dichten Paket zusammengefaßten Enden von Blechen bestehen, so daß eine zusätzliche Verbindungstechnik und zusätzliche Strukturteile nicht unbedingt erforderlich sind. In den meisten Fällen wird es jedoch günstig sein, die Tragstrukturen aus separaten Blechen auszuführen und die den Wabenkörper bildenden Bleche fügetechnisch an diesen zu befestigen, insbesondere anzulöten. Wie anhand der Zeichnung näher erläutert wird, ist es für die meisten auszufüllenden Querschnittsformen günstig, wenn die den Wabenkörper bildenden Bleche schräg auf die Tragwände zulaufen, wobei es in vielen Fällen zusätzlich günstig ist, wenn die Tragstrukturen entlang den Isolierungen gebogen sind.

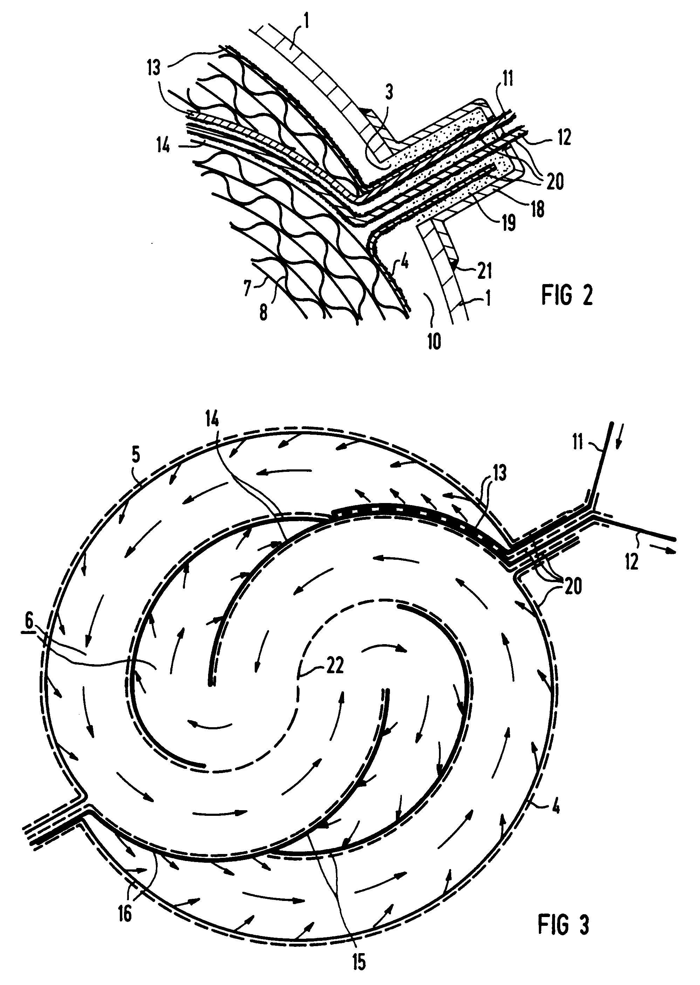

Wie anhand der Zeichnung, insbesondere Figur 3, weiterhin erläutert wird, sollen die Tragstrukturen als gleichzeitige elektrische Anschlüsse eine gleichmäßige Beaufschlagung mit elektrischem Strom ermöglichen. Hierzu kann eine Anpassung der elektrischen Leitfähigkeit der Tragstrukturen in verschiedenen Bereichen erforderlich sein, was durch örtlich geeignet gewählte Blechdicken erreichbar ist. Prinzipiell können die Tragstrukturen unter Umständen auch mit sich kontinuierlich entsprechend den Stromverhältnissen ändernder Dicke hergestellt sein, jedoch wird in den meisten Fällen auch ein Kompromiß mit z. B. nur zwei oder drei verschiedenen Blechdicken möglich sein.

Die hauptsächlich metallischen Tragstrukturen im Inneren des Wabenkörpers ermöglichen es, die elektrische Unterteilung hauptsächlich durch Spalte zu verwirklichen. Nach dem Stand der Technik wäre eine Unterteilung durch Spalte mechanisch kaum stabil gewesen, da langgestreckte schwingungsfähige Gebilde bei elektrisch sinnvollen Unterteilungen entstehen. Bei den typischen meachanischen Belastungen in einem Kraftfahrzeug durch Druckstöße im Abgassystem und Erschütterungen durch Fahrzeugbewegungen wäre die Zerstörung eines solchen Körpers nach kurzer Betriebszeit die Folge gewesen, wobei zusätzlich elektrische Kurzschlüsse kaum zu vermeiden wären. Durch relativ dicke, mechanisch stabile Tragstrukturen, ist es jedoch möglich auch langgestreckte Teilabschnitte des Wabenkörpers durch an diesen Teilabschnitten entlang verlaufende Tragstrukturen so stabil abzustützen, daß weder elektrische Kurzschlüsse noch mechanische Überbelastungen auftreten. Dabei können die Spalte so eng gehalten werden, daß sie die Funktion des Wabenkörpers nicht beeinträchtigen. Die Spalte können beispielsweise in einer ähnlichen Größenordnung liegen wie die Strukturhöhe der einzelnen Bleche bzw. der Abstand der Blechlagen. In einzelnen, besonders kritischen Bereichen oder an Stellen wo sich Tragstrukturen unterschiedlichen elektrischen Potentials sehr nahe kommen können, können zusätzliche elektrisch isolierende Schichten vorgesehen werden.

Besonders günstig für das Anbringen von elektrisch isolierenden Schichten in einem Wabenkörper ist es, diese Schichten einseitig oder beidseitig auf die Tragstrukturen aufzubringen, vorzugsweise in Form einer flammgespritzten Keramikschicht. Während es sehr schwierig ist, elektrisch isolierende Schichten auf sehr dünne Bleche aufzubringen, wie sie normalerweise zur Bildung von Wabenkörpern verwendet werden, ist es verhältnismäßig einfach, solche Schichten auf massive Bleche, wie sie für die Tragstrukturen Verwendung finden, aufzutragen. Dabei bieten sich für sehr stabile Schichten z. B. Flammspritzen, Plasmaspritzen oder Detonationsbeschichten an.

Auf elektrisch isolierende Zwischenlagen, beispielsweise in Form von keramischen Fasermatten oder dergleichen kann vollständig verzichtet werden.

Günstig bei der Konstruktion erfindungsgemäßer Wabenkörper wirkt sich aus, daß für eine elektrische Beheizung solcher Wabenkörper nur relativ niedrige Spannungen, beispielsweise die in Kraftfahrzeugen vorkommenden 12 oder 24 V, benötigt werden. Die Anforderungen an eine Isolierung sind daher bei weitem nicht so hoch, wie bei Systemen mit höheren Spannungen. Außerdem ist der Hauptanwendungsfall für solche Wabenkörper eine Beheizung in der Kaltstartphase bei Kraftfahrzeugen, so daß die elektrische Isolierung nur bis zu einer bestimmten Temperatur, beispielsweise 300°C, wirksam sein muß, während bei höheren Temperaturen und/oder bei späteren Erschütterungen eventuell auftretende Kurzschlüsse durch thermische Dehnungen oder Schwingungen keine nachteiligen Auswirkungen mehr haben, weil der Wabenkörper dann nicht mehr mit elektrischer Spannung beaufschlagt ist.

Wie anhand der Zeichnung näher erläutert wird, ist es zur Erzielung eines genügend hohen Widerstandes nicht immer ausreichend, einen nur einfach S-förmig verlaufenden Strompfad in dem Wabenkörper zu bilden. Eine Verdopplung der Länge des Strompfades bei gleichzeitiger Verdopplung des Widerstandes pro Länge kann erreicht werden, indem in einem S-förmig verschlungenen Stapel statt oder parallel einer mittleren Blechlage ein Spalt oder eine elektrisch isolierende Schicht vorgesehen wird, wobei alle Bleche an einem ersten Ende des Stapels elektrisch leitend miteinander verbunden sind, während am anderen Ende des Stapels die eine Hälfte der Bleche auf der einen Seite der mittleren Isolierung über eine erste tragende Anschlußstruktur mit einem ersten Anschlußkontakt und die andere Hälfte der Bleche auf der anderen Seite der mittleren Isolierung über eine zweite tragende Anschlußstruktur mit einem zweiten Anschlußkontakt verbunden sind. Diese Anordnung hat neben dem erhöhten elektrischen Widerstand zusätzlich den Vorteil, daß beide Anschlußkontakte auf einer Seite, vorzugsweise nahe beieinander, an dem Wabenkörper angeordnet sind, was die Einbindung in ein Abgassystem erleichtern kann.

Zur Erhöhung der Stabilität kann es notwendig werden, die elektrisch leitende Verbindung am ersten Ende des Stapels durch eine tragende Überbrückungsstruktur auszubilden, welche elektrisch isoliert am Mantelrohr befestigt oder abgestützt ist. In der mechanischen Stabilität unterscheidet sich dieser Wabenkörper nicht von einem S-förmigen Stapel ohne zusätzliche elektrische Unterteilung.

Als besonders günstig für die Stromverteilung in dem Wabenkörper hat es sich erwiesen, wenn die Tragstrukturen in Teilbereichen jeweils mehrere Lagen von Blechen zur elektrischen Kontaktierung schnabelartig umfassen. Durch eine solche schnabelartige Kontaktierung kann weitgehend verhindert werden, daß Ströme sich bei gekrümmten Blechstapeln im wesentlichen im Innenbereich der Krümmung konzentrieren. Im übrigen ist eine schnabelartige Umfassung der Bleche auch mechanisch besonders stabil.

Trotz der Stabilisierung des ganzen Körpers durch Tragstrukturen kann es ohne Zusatzmaßnahmen ganz im Inneren des Körpers zu Schwingungen kommen. Solche lassen sich unterdrücken oder zumindest stark verringern, indem die Tragstrukturen zumindest in Teilbereichen, vorzugsweise in weit vom Außenumfang des Wabenkörpers entfernt liegenden Teilbereichen, über eine oder beide Stirnseite(n) des Wabenkörpers überstehende, die Stirnseite(n) nicht berührende Verstärkungslappen aufweisen, welche elektrisch isoliert sich untereinander und/oder an dem Mantelrohr abstützen. Solche Abstützungen vermeiden dabei nicht nur Schwingungen, sondern können ebenfalls die Aufrechterhaltung von elektrisch isolierenden Spalten gewährleisten. Für die Art der Abstützung gibt es unterschiedliche Möglichkeiten, beispielsweise die Ausbildung eines stabilen Ringes vor einer oder beiden Stirnseite(n) oder die Abstützung am Mantelrohr in jeder gewünschten Richtung.

Auch für die erfindungsgemäßen Wabenkörper kommen als geeignete Bleche die für solche Körper bekannten abwechselnd angeordneten glatten und gewellten Bleche in Betracht. Auch jede andere Form der für Wabenkörper geeigneten Strukturierung der Blechlagen ist anwendbar. Als Material werden zumindest bei der Anwendung in Abgassystemen von Kraftfahrzeugen hochtemperaturkorrosionsfeste Stähle in Betracht zu ziehen sein. Ein typischer Anwendungsfall ist die Verwendung als heizbarer Katalysator, so daß eine vollständige oder teilweise Beschichtung mit katalytisch aktivem Material vorzusehen ist. Da ein solcher Heizkatalysator hauptsächlich das Verhalten in der Kaltstartphase beeinflussen soll, kann sich dessen katalytisch aktive Beschichtung auch von der eines üblichen Katalysators dahingehend unterscheiden, daß bevorzugt eine hauptsächlich oxidierend wirkende Beschichtung, beispielsweise eine Bedampfung mit Platin und/oder Rhodium, vorgesehen wird.

Als Bereich für den elektrischen Widerstand eines solchen Wabenkörpers bei 20° C kommt im Hinblick auf die Verwendung in elektrischen Anlagen bei Kraftfahrzeugen ein Widerstand von 0,01 bis 0,3 0hm in Betracht, vorzugsweise 0,025 bis 0,1 0hm, insbesondere etwa 0,02 0hm. Entsprechend neueren Entwicklungen ist davon auszugehen, daß ein solcher Wabenkörper innerhalb von wenigen Sekunden eine Temperatur von 250 bis 300° C erreichen soll, weshalb durchaus Stromstärken von über 400 A in Betracht zu ziehen sind. Die genauen auftretenden Stromstärken in einem solchen Wabenkörper hängen dabei schon erheblich vom inneren Widerstand einer verwendeten Stromquelle und dem Widerstand der Zuleitungen ab, so daß nicht von einer konstanten Versorgung eines solchen Wabenkörpers mit der Nennspannung eines Versorungssystems ausgegangen werden kann. Um dennoch eine genügend schnelle Aufheizung sicherzustellen, muß ein entsprechend niedriger Widerstand gewählt werden, der Ströme von beispielsweise 400 bis 800 A zuläßt.

Zur Verdeutlichung der Dickenverhältnisse in einem erfindungsgemäßen Wabenkörper sei erwähnt, daß typische Bleche für solche Wabenkörper eine Dicke von 0,03 bis 0,06 mm aufweisen, während die Tragstrukturen eine Dicke von 0,5 bis 1,5 mm, vorzugsweise etwa 1 mm haben können. Teile der Tragstrukturen, die örtlich nur geringere Stromstärken aufnehmen müssen, können auch eine Dicke von nur 0,2 bis 0,8 mm, vorzugsweise etwa 0,5 mm aufweisen.

Insbesondere für die Verwendung eines Wabenkörpers als Heizkatalysator vor einem Hauptkatalysator kann es sinnvoll sein, diesen so auszubilden, daß sein Durchmesser größer als der Abstand der Stirnseiten ist. Eine solche, relativ dünne Scheibe, läßt sich zusammen mit einem Hauptkatalysator in einem gemeinsamen Mantelrohr integrieren. Die Erfindung läßt jedoch prinzipiell beliebige andere Dimensionierungen und Verhältnisse zwischen Durchmesser und Abstand der Stirnseiten zu.

Ausführungsbeispiele der Erfindung sind in der Zeichnung dargestellt, und zwar zeigen
Figur 1 einen Querschnitt durch einen erfindungsgemäßen Wabenkörper mit zweifach S-förmigem Strompfad,
Figur 2 die Einzelheit II aus Figur 1, nämlich die Durchführung der Anschlußstrukturen durch das Mantelrohr,
Figur 3 eine Veranschaulichung der Verteilung des elektrischen Stromes in einem erfindungsgemäßen Wabenkörper im Querschnitt,
Figur 4 ein Ausführungsbeispiel der Erfindung in Form eines ovalen Wabenkörpers,
Figur 5 schematisch eine perspektivische Veranschaulichung der Raumverhältnisse bei Benutzung eines erfindungsgemäßen Wabenkörpers als beheizbaren Vorschaltkatalysator vor einem Hauptkatalysator in einem gemeinsamen Mantelrohr und
Figuren 6, 7 und 8 verschiedene Möglichkeiten der Anordnung von über die Stirnseiten des Wabenkörpers überstehenden Verstärkungslappen zur Stabilisierung des Wabenkörpers.

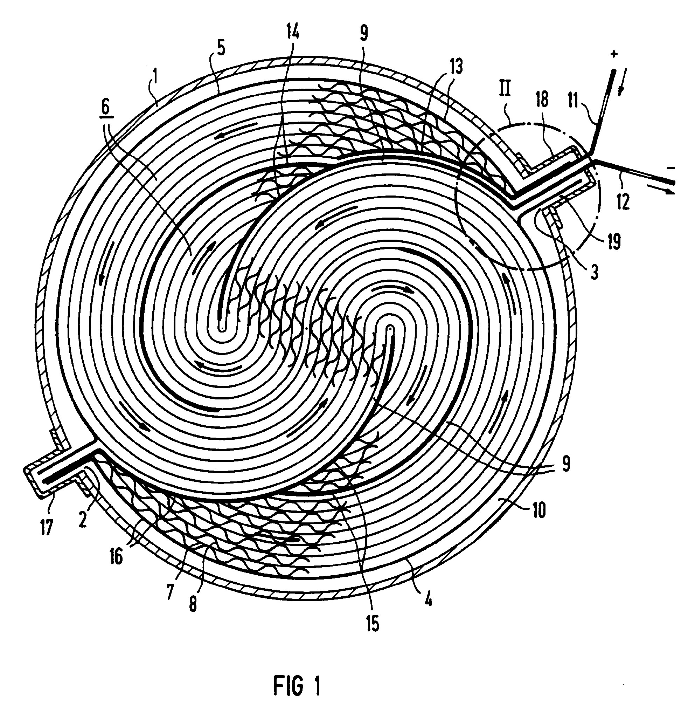

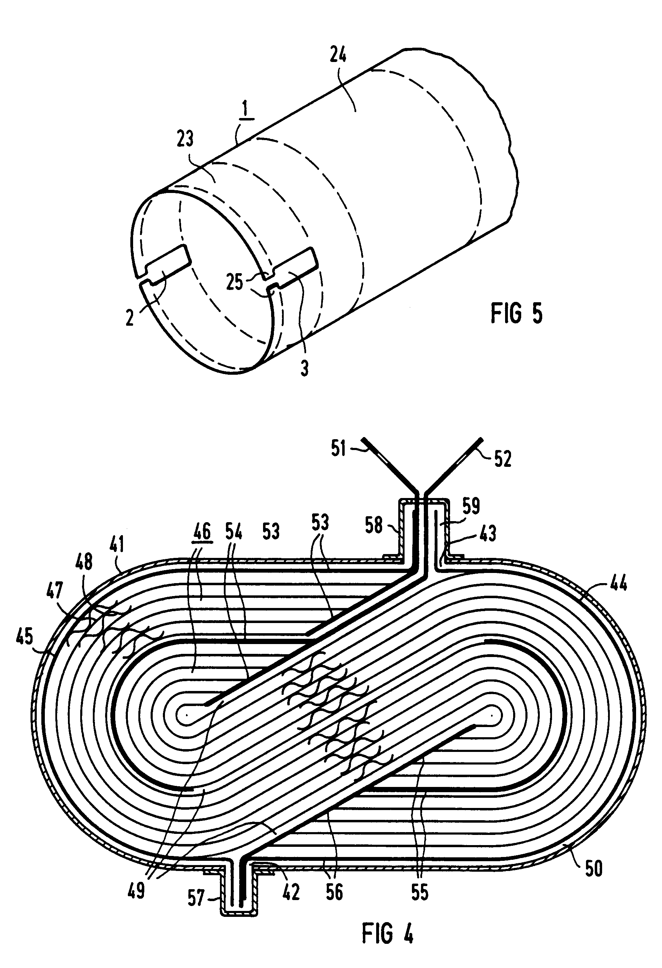

Figur 1 zeigt ein Mantelrohr 1 mit Längsschlitzen 2 und 3 (wie in Figur 5 nochmals perspektivisch zu sehen), in welchem ein verschlungener Stapel 6 aus abwechselnd angeordneten glatten 7 und gewellten 8 Blechen untergebracht ist. Der Blechstapel 6 berührt das Mantelrohr selbst nicht, sondern wird von Tragstrukturen 13, 14, 15, 16 getragen. Fertigungstechnisch und für die Stromverteilung in dem Wabenkörper bei Beaufschlagung mit elektrischem Strom ist es günstig, wenn der verschlungene Blechstapel 6 durch zwei Halbschalen 4, 5 eingefaßt ist, welche durch abgewinkelte Enden eine elektrisch isolierende Befestigung am Mantelrohr 1 ermöglichen. Auch die übrigen Tragstrukturen haben solche abgewinkelten Enden, welche durch die Schlitze 2, 3 im Mantelrohr 1 nach außen ragen. Der Wabenkörper selbst ist durch elektrisch isolierende Spalte 9 elektrisch unterteilt, wobei die Tragstrukturen 13, 14, 15, 16 entlang dieser Spalte verlaufen und tief in das Innere des Wabenkörpers reichen. Auf diese Weise stabilisieren die Tragstrukturen 13, 14, 15, 16 die Bleche so stark, daß die Spalte ohne zusätzliche Maßnahmen als Isolierung dienen können. Auch verbleibende Teilspalte 22 im Inneren des Wabenkörpers, die nicht direkt durch Tragstrukturen stabilisiert sind, werden durch die Starrheit des Körpers im übrigen Bereich stabilgehalten.

Wie auch aus den ergänzenden Figuren 2 und 3 zu ersehen ist, müssen die Tragstrukturen 13, 14, 15, 16 zumindest im Durchführungsbereich durch die Schlitze 2, 3 im Mantelrohr elektrisch voneinander isoliert sein. Eine solche elektrische Isolierung kann auch als zusätzliche Maßnahme im Bereich der Spalte 9 von Vorteil sein. Sie kann besonders einfach durch eine keramische Auftragsschicht 20 auf Teilbereichen der Strukturen 13, 14, 15, 16 und gegebenenfalls auch der Halbschalen 4 und 5 vorgesehen werden, und zwar jeweils auf den Seiten zu denen hin eine elektrische Isolierung gewünscht wird. Diese Schicht kann vorzugsweise durch Flammspritzen hergestellt werden. Hier liegt im übrigen ein großer Vorteil der vorliegenden Erfindung, da elektrisch isolierende Schichten nicht als gesonderte Lagen eingebracht werden müssen, was mechanische Stabilitätsprobleme mit sich bringen würde. Auch müssen nicht die sehr dünnen, die eigentliche Wabenstruktur bildenden Bleche beschichtet werden, was ebenfalls sehr schwierig wäre. Die verhältnismäßig dicken Tragstrukturen 4, 5, 13, 14, 15, 16 hingegen lassen sich problemlos in ihrer endgültigen Form vorfertigen und an den gewünschten Seiten mit keramischen Auftragsschichten versehen. Sofern der Spalt 10 zwischen den Halbschalen 4, 5 und dem Mantelrohr 1 genügend groß ist, ist hier eine zusätzliche Isolierung nicht erforderlich. Falls jedoch, z. B. aus Stabilitätsgründen, die Halbschalen 4, 5 mit Verstärkungen durch Außensicken versehen sind, so wäre eine zumindest teilweise isolierende Beschichtung außen auf den Halbschalen 4, 5 oder innen auf dem Mantelrohr 1 von Vorteil. Die Fixierung der Tragstrukturen in den Schlitzen 2, 3 im Mantelrohr 1 erfolgt bevorzugt durch eine geschlossene Haltekappe 17 und eine geschlitzte Haltekappel 18, welche metallisch mit dem Mantelrohr verbunden sind, vorzugsweise durch Schweißnähte 21. Die abgewickelten Enden der Tragstrukturen müssen im Inneren dieser Haltekappe entsprechend den elektrischen Bedingungen teilweise durch Beschichtungen voneinander und von den Haltekappen 17, 18 isoliert sein. Die mechanische Fixierung erfolgt daher vorzugsweise durch eine formschlüssige Verklammerung, indem die Haltekappen 17, 18 wellförmig oder zick-zackförmig mit den in ihr liegenden Blechen verpreßt werden. Dabei ist die Kappe 17, da sie geschlossen ist, ohne Zusatzmaßnahmen dicht, während in allen eventuell verbleibenden Zwischenräumen 19 in der geschlitzten Kappe 18 zur Abdichtung ein Quellmaterial miteingepreßt werden kann. Solche Quellmaterialien bestehen z. B. aus Glimmerfasern, welche aufgrund kristalliner Umstrukturierungen entstehende Hohlräume immer wieder ausfüllen. Aus der geschlitzten Kappe 18 ragen die Enden 11, 12 der Tragstrukturen 13, 14 heraus. wie anhand der Figuren 1 und 3 durch Pfeile veranschaulicht wird, kann der Wabenkörper auf einem doppelt S-förmigen Weg von elektrischem Strom durchflossen werden. Dieser Strom gelangt (die Beschreibung erfolgt unter der Annahme eines Gleichstromes) von dem ersten Anschlußkontakt 11 über die Tragstruktur 13 in die obere Hälfte der Bleche 7, 8 des Blechstapels 6. Dabei umfaßt die Tragstruktur 13 dieses Ende schnabelartig, wobei die Halbschale 5 eine Fortsetzung dieser Umfassung darstellt. Auf diese Weise kann der Stromfluß sehr gleichmäßig in den Körper eingebracht werden. Entlang der Pfeile fließt der Strom zu der schnabelartigen Tragstruktur 15, welche zusammen mit der ebenfalls schnabelartigen Tragstruktur 16 eine Überbrückung zwischen den beiden Hälften des Blechstapels 6 an einem Ende bildet, so daß der Strom in der zweiten Hälfte der Bleche 7, 8 zurückfließen kann zu der tragenden Anschlußstruktur 14, von wo aus er zum Anschlußkontakt 12 gelangt. In Figur 3 wird dabei insbesondere durch kleine Pfeile die Wirkung der tief in das Innere ragenden Tragstrukturen 13, 14, 15, 16 sowie der Halbschalen 4, 5 auf die Stromverteilung veranschaulicht. Isolierende Spalte und/oder Beschichtungen sind durch gestrichelte Linien 20, 22 angedeutet. Besonders deutlich ist aus Figur 3 zu sehen, daß durch das Fehlen von Tragstrukturen ganz im Inneren des Wabenkörpers, in dem sich ein freier Spalt 22 befindet, alle Ströme durch die Bleche 7, 8 des Stapels 6 verlaufen müssen, so daß gerade in diesem Bereich ein sehr gleichmäßiger Stromfluß erreicht wird, der zu einer gleichmäßigen Aufheizung führt.

Es sei darauf hingewiesen, daß die Stromführung in einer doppelten S-Form nur ein besonderes Ausführungsbeispiel der vorliegenden Erfindung ist. Sofern der Wabenkörper auch einen niedrigeren Widerstand haben darf, genügt eine einfach S-förmige Stromführung, so daß in diesem Falle auf einen Spalt im Inneren des Stapels 6 verzichtet werden könnte und die Tragstrukturen 13, 14 gemeinsam als Stromzuleitung und die Tragstrukturen 15, 16 gemeinsam als Stromableitung dienen könnten. In diesem Falle wären allerdings die elektrischen Anschlüsse nicht nebeneinander an einer Seite des Wabenkörpers sondern an gegenüberliegenden Seiten.

Figur 4 zeigt einen elektrisch ganz analog zu Figur 1 aufgebauten Wabenkörper in ovaler Querschnittsform. Alle bisherigen Erläuterungen gelten sinngemäß auch für diese Ausführungsform. Auch dieser Körper weist ein Mantelrohr 41 mit Schlitzen 42, 43 auf, in dem ein S-förmiger Stapel 46 von glatten 47 und gewellten 48 Blechen untergebracht ist. Dieser Blechstapel ist von geringfügig unsymmetrischen Halbschalen 44, 45 eingefaßt und an Tragstrukturen 53, 54, 55, 56 gehaltert. Durch Spalte 49 ist der Körper elektrisch in zwei miteinander verschachtelte S-förmige Schichten unterteilt, welche gemeinsam den elektrischen Strompfad bilden. Der Stapel 46 ist durch einen Spalt 50 vom Mantelrohr getrennt und durch die Tragstrukturen 53, 54, 55, 56 elektrisch isoliert an diesem befestigt, und zwar in Haltekappen 57 und 58. Die Tragstrukturen 53 und 54 enden in Anschlußkontakten 51, 52, wobei verbleibende Zwischenräume 59 in der Haltekappe 58 durch ein Quellmaterial dichtend ausgefüllt sein können.

Figur 5 zeigt in schematischer, perspektivischer Darstellung den vorderen Teil eines Mantelrohrs 1, welcher zur Aufnahme eines erfindungsgemäßen Wabenkörpers vorbereitet ist. Ein solcher Wabenkörper kann mit den Enden seiner Tragstrukturen in die Schlitze 2 und 3 eingeschoben werden, wobei die Schlitze 2 und 3 an ihren äußeren Enden durch Montagelappen 25 begrenzt sein können, welche vor dem Einschieben eines Wabenkörpers aufgebogen und anschließend wieder in ihre ursprüngliche Lage zurückgebogen werden. Auf solche Lappen kann jedoch auch verzichtet werden, wenn das Schließen des Spaltes durch eine geeignet geformte Haltekappe erfolgt. Gestrichelt angedeutet ist in Figur 5 die spätere Einbaulage 23 für einen erfindungsgemäßen Wabenkörper. Ebenfalls gestrichelt angedeutet ist die eventuelle Einbaulage 24 eines nachgeschalteten Hauptkatalysators, welcher bevorzugt in dem gleichen Mantelrohr 1 angeordnet sein kann, was den Gesamtaufwand bei der Fertigung und späteren Montage verringert.

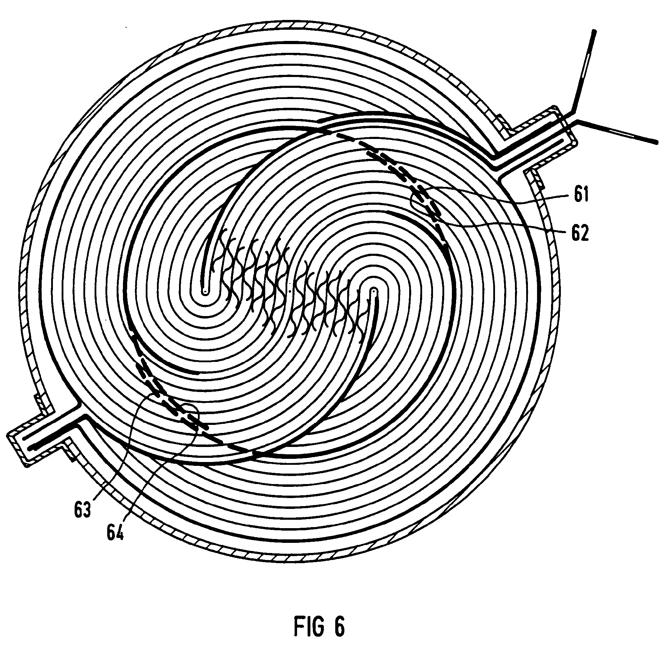

Die Figuren 6, 7 und 8 zeigen verschiedene Möglichkeiten zur Stabilisierung erfindungsgemäßer Wabenkörper bzw. zur Schwingungsunterdrückung für Anwendungsfälle mit besonders hoher mechanischer Belastung. In allen Figuren sind durch gestrichelte Linien Strukturen angedeutet, welche sich vor und/oder hinter den Stirnseiten des eigentlichen Wabenkörpers befinden. Solche Strukturen können schon bei der Herstellung der Tragstrukturen als Verbreiterungen oder überstehende Lappen an den Tragstrukturen vorgesehen werden was praktisch keinen zusätzlichen Fertigungsaufwand erfordert.

In Figur 6 bilden diese über die Stirnseiten des Wabenkörpers überstehenden Verstärkungslappen 61, 62 und 63, 64 zusammen mit einem inneren Teil der Tragstruktur des Wabenkörpers, der gegebenenfalls ebenfalls über die Stirnseiten überstehen kann, eine Art Ring, welcher eine besonders hohe Stabilität der inneren Teile des Wabenkörpers gegen Schwingungen bewirkt. Dabei müssen unter Berücksichtigung der elektrischen Bedingungen die Verstärkungslappen 61, 62 elektrisch voneinander isoliert, mechanisch aber fest verbunden sein, was durch entsprechende keramische Beschichtungen und eine formschlüssige Verbindung, z. B. eine Verklammerung erreichbar ist. Das gleiche gilt für die Verstärkungslappen 63, 64. Auch dürfen die Verstärkungslappen 61, 62, 63, 64 die Bleche des Wabenkörpers, zur Einhaltung der elektrischen Bedingungen nicht berühren. Ein solcher Ring vor und/oder hinter der Stirnseite eines Wabenkörpers stellt keine besondere Behinderung für dessen Verwendung dar, weil die üblichen Anordnungen zur Anströmung solcher Wabenkörper ohnehin einen entsprechenden Freiraum haben. Auch braucht ein solcher Verstärkungsring keine große Ausdehnung in Richtung der Kanäle des Wabenkörpers zu haben, so daß eine Tiefe von beispielsweise etwa 1 cm ausreicht.

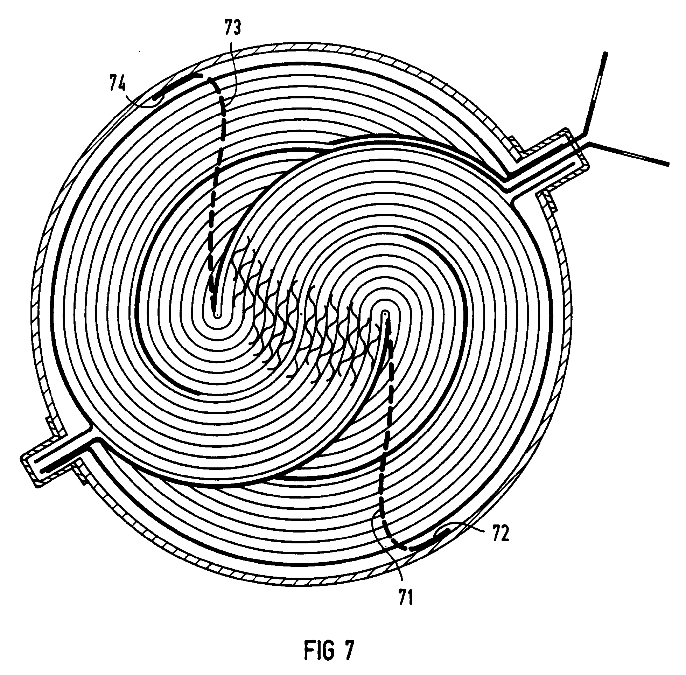

In Figur 7 erfolgt die Stabilisierung durch Verstärkungslappen 71, 73, welche innere Teile der Tragstruktur gegen das Mantelrohr abstützen. Auch diesen Verstärkungslappen 71, 73 verlaufen vor und/oder hinter den Stirnseiten des Wabenkörpers, ohne diesen zu berühren. Sie sind an Befestigungspunkten 72, 74 elektrisch isoliert am Mantelrohr befestigt, beispielsweise durch Laschen. Dieses Ausführungsbeispiel hat den Vorteil, daß die Befestigungs- bzw. Abstützungspunkte des Wabenkörpers über den Umfang des Mantelrohres verteilt sind, so daß Schwingungen in besonderem Maße unterdrückt und der Körper besonders stabilisiert wird. Diese Art der Abstützung entlastet die Tragstrukturen.

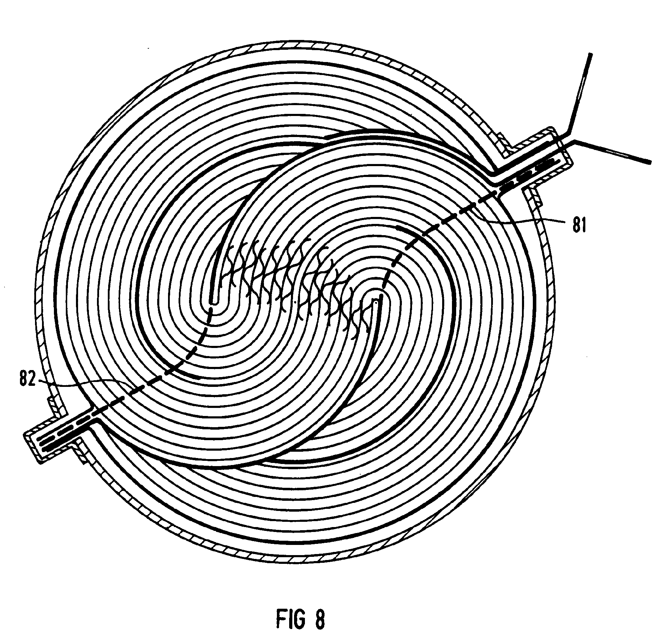

Fertigungstechnisch einfacher sind jedoch Verstärkungslappen 81, 82 wie sie in Figur 8 dargestellt werden. Die Enden dieser Verstärkungslappen können gleichzeitig mit den übrigen Tragstrukturen unter Berücksichtigung der elektrischen Isolationsbedingungen mit in den Haltekappen befestigt werden. Auch diese Ausführungsform erhöht sehr stark die Stabilität, da durch die Verstärkungslappen 81, 82 in Verbindung mit den Tragstrukturen stabile Brücken von einer Seite des Mantelrohres zur anderen gebildet werden, wobei diese im Bereich der gestrichelten Linien vor und/oder hinter den Stirnseiten des Wabenkörpers verlaufen.

Erfindungsgemäße Wabenkörper lassen sich verhältnismäßig leicht herstellen, in dem die Tragstrukturen vorgefertigt und wo nötig mit isolierender Beschichtung versehen werden. Die strukturierten Blech lassen sich dann relativ leicht in die vorgefertigte Tragstruktur einschieben und durch Zusammenziehen der Halbschalen in die gewünschte Form bringen. Ganz zum Schluß erfolgt das Einschieben in Schlitze im Mantelrohr, das Überschieben von Haltekappen und das Verpressen der Haltekappen zu formschlussigen, mechanisch festen Verbindungen, wobei die Haltekappen am Mantelrohr angeschweißt werden können. Die strukturierten Bleche können gegebenenfalls untereinander und an ihren Haltestrukturen verlötet werden, wie dies an sich hinreichend bekannt ist. Anschließend kann der Wabenkörper je nach Anwendung ganz oder teilweise mit einer katalytisch aktiven Beschichtung versehen werden. Ein wesentlicher Anwendungsbereich für erfindungsgemäße Wabenkörper ist die Verwendung als Heizkatalysatoren, welche den Schadstoffausstoß von Kraftfahrzeugen in der Kaltstartphase senken, indem sie vor und/oder kurz nach dem Start mit hohen Strömen schnell auf eine Temperatur aufgeheizt werden, bei der eine katalytische Umsetzung von Schadstoffen einsetzt.

## Patentansprüche

1. Wabenkörper mit zwei Stirnseiten, aufgebaut aus lagenweise angeordneten, zumindest teilweise strukturierten Blechen (7, 8; 47, 48), die eine Vielzahl von für ein Fluid durchströmbaren Kanälen bilden, welche von der einen Stirnseite zur anderen verlaufen, wobei der Wabenkörper durch einen oder mehrere in Richtung von einer Stirnseite zur anderen verlaufende flächige Spalte (9; 49) und/oder elektrisch isolierende Schichten (20) so unterteilt ist, daß in jedem Querschnittsbereich die elektrische Leitfähigkeit, des Wabenkörpers verringert ist, sich jedoch mindestens ein gewundener, elektrisch zusammenhängender leitfähiger, in der Querschnittsebene verlaufender Strompfad ergibt, dadurch gekennzeichnet, daß die Bleche (7, 8, 47, 48) gehaltert sind an zumindest teilweise im Inneren des Wabenkörpers verlaufenden, hauptsächlich metallischen Tragstrukturen (4, 5, 13, 14, 15, 16; 44, 45, 53, 54, 55, 56), welche zumindest abschnittsweise parallel zu den elektrisch isolierenden Spalten (9; 49) und/oder Schichten (20) bzw. innerhalb derselben verlaufen, und die Tragstrukturen (4, 5, 13, 14, 15, 16; 44, 45, 53, 54, 55, 56) gleichzeitig als Stabilisatoren der Spalte (9; 49) und/oder als Träger der elektrisch isolierenden Schichten (20) ausgebildet sind.

2. Wabenkörper nach Anspruch 1, **dadurch** **gekennzeichnet,** daß ein erster Teil der Tragstrukturen (13; 53) elektrisch gut leitend untereinander und mit einem ersten Anschlußkontakt (11; 51) verbunden ist und ein zweiter Teil der Tragstrukturen (14; 54) elektrisch gut leitend untereinander und mit einem zweiten Anschlußkontakt (12; 52) verbunden ist, wobei der erste Teil der Tragstrukturen (13; 53) nur über mindestens einen durch die Bleche (7, 8; 47, 48) verlaufenden Strompfad mit dem zweiten Teil der Tragstrukturen (14; 54) elektrisch leitend verbunden ist.

3. Wabenkörper nach Anspruch 1 oder 2, **dadurch** **gekennzeichnet,** daß der Wabenkörper innerhalb eines Mantelrohres (1; 41), aber von diesem elektrisch isoliert (10, 50) angeordnet ist und die Bleche (7, 8; 47, 48) nur über die Tragstrukturen (13, 14, 15, 16; 53, 54, 55, 56) mechanisch mit dem Mantelrohr (1; 41) verbunden sind.

4. Wabenkörper nach Anspruch 3, **dadurch** **gekennzeichnet,** daß die Tragstrukturen (13, 14, 15, 16; 53, 54, 55, 56) elektrisch isoliert durch das Mantelrohr (1; 41) hindurchgeführt und/oder an diesem befestigt sind, vorzugsweise durch Formschlußverbindungen.

5. Wabenkörper nach einem der vorhergehenden Ansprüche, **dadurch gekennzeichnet,** daß die Bleche (7, 8; 47, 48) im wesentlichen in einem oder mehreren etwa S-förmig gebogenen Stapel(n) (6; 46) angeordnet sind.

6. Wabenkörper nach Anspruch 5, **dadurch** **gekennzeichnet,** daß die elektrisch isolierenden Spalten (9; 49) und/oder Schichten (20) so angeordnet sind, daß der sich ergebende Strompfad im wesentlichen einmal oder mehrfach etwa S-förmig dem oder den Stapel(n) (6; 46) der Bleche (7, 8; 47, 48) folgt.

7. Wabenkörper nach einem der vorhergehenden Ansprüche, **dadurch gekennzeichnet,** daß die Bleche (7, 8; 47, 48) im Inneren des Wabenkörpers an den Tragstrukturen (13, 14, 15, 16; 53, 54, 55, 56) befestigt sind bzw. in diese übergehen, vorzugsweise unter von 90° verschiedenen Winkeln.

8. Wabenkörper nach einem der vorhergehenden Ansprüche, **dadurch gekennzeichnet,** daß die Tragstrukturen (4, 5, 13, 14, 15, 16; 44, 45, 53, 54, 55, 56) einen an die örtlichen aufzunehmenden Stromstärken angepaßten örtlichen elektrischen Widerstand haben, so daß einzelne Teilbereiche der Tragstrukturen (4, 5, 13, 14, 15, 16; 44, 45, 53, 54, 55, 56) unterschiedliche Dicke haben können.

9. Wabenkörper nach einem der vorhergehenden Ansprüche, **dadurch gekennzeichnet,** daß die elektrische Unterteilung im Inneren des Wabenkörpers hauptsächlich durch Spalte (9; 49) erfolgt, in Teilbereichen jedoch unterstützt durch elektrisch isolierende Schichten (20).

10. Wabenkörper nach Anspruch 9, **dadurch** **gekennzeichnet,** daß die elektrisch isolierenden Schichten (20) einseitig oder beidseitig auf die Tragstrukturen (13, 14, 15, 16; 53, 54, 55, 56) aufgebracht sind, vorzugsweise in Form einer flammgespritzten Keramikschicht.

11. Wabenkörper nach Anspruch 5, 6, 7, 8, 9 oder 10, **dadurch gekennzeichnet,** daß der Wabenkörper aus einem etwa S-förmig verschlugenen Stapel (6; 46) von Blechen (7, 8; 47, 48) gebildet ist, welcher statt oder parallel einer mittleren Blechlage einen Spalt (9; 22; 49) oder eine elektrisch isolierende Schicht (20) enthält, wobei alle Bleche an einem ersten Ende des Stapels (6; 46) elektrisch leitend miteinander verbunden (15, 16; 55, 56) sind, während am anderen Ende des Stapels (6; 46) die eine Hälfte der Bleche (7, 8; 47, 48) auf der einen Seite der mittleren Isolierung (9; 20; 22; 49) über eine erste tragende Anschlußstruktur (13; 53) mit einem ersten Anschlußkontakt (11; 51) und die andere Hälfte der Bleche (7, 8; 47, 48) auf der anderen Seite der mittleren Isolierung (9; 20; 22; 49) über eine zweite tragende Anschlußstruktur (14; 54) mit einem zweiten Anschlußkontakt (12; 52) verbunden sind.

12. Wabenkörper nach Anspruch 11, **dadurch** **gekennzeichnet,** daß die elektrisch leitende Verbindung am ersten Ende des Stapels (6; 46) durch eine tragende Überbrückungsstruktur (15, 16; 55, 56) gebildet wird, welche elektrisch isoliert am Mantelrohr (1; 41) befestigt (17; 57) oder abgestützt ist.

13. Wabenkörper nach einem der vorhergehenden Ansprüche, **dadurch gekennzeichnet,** daß die Tragstrukturen in Teilbereichen (13, 14, 15 ,16; 53, 54, 55, 56) jeweils mehrere Lagen von Blechen (7, 8; 47 48) zur elektrischen Kontaktierung schnabelartig umfassen.

14. Wabenkörper nach einem der vorhergehenden Ansprüche, **dadurch gekennzeichnet,** daß die Tragstrukturen (14, 15; 54, 55) zumindest in Teilbereichen, vorzugsweise in weit vom Außenumfang des Wabenkörpers entfernt liegenden Teilbereichen, über eine oder beide Stirnseite(n) des Wabenkörpers überstehende, die Stirnseite(n) nicht berührende Verstärkungslappen (61, 62, 63, 64; 71, 72; 81, 82) aufweisen, welche elektrisch isoliert sich untereinander und/oder an dem Mantelrohr (1; 41) abstützen (72, 74).

15. Wabenkörper nach einem der vorhergehenden Ansprüche, **dadurch gekennzeichnet,** daß die Bleche (7, 8; 47, 48) abwechselnd angeordnete glatte (7; 47) und gewellte (8; 48) Bleche sind, insbesondere aus hochtemperaturkorrosionsfestem Stahl.

16. Wabenkörper nach einem der vorhergehenden Ansprüche, **dadurch gekennzeichnet,** daß die Bleche (7, 8; 47, 48) abwechselnd angeordnete, unterschiedlich gewellte oder strukturierte Bleche sind.

17. Wabenkörper nach einem der vorhergehenden Ansprüche, **dadurch gekennzeichnet,** daß der Wabenkörper zur Abgasreinigung dient, insbesondere für Kraftfahrzeuge mit Otto-Motor, und mit katalytisch aktivem Material beschichtet bzw. beschichtbar ist.

18. Wabenkörper nach einem der Ansprüche 2 bis 17, **dadurch gekennzeichnet,** daß der Wabenkörper bei 20° C einen elektrischen Widerstand zwischen dem ersten (11; 51) und dem zweiten (12; 52) Anschlußkontakt von 0,01 bis 0,3 Ohm, vorzugsweise 0,025 bis 0,1 Ohm, insbesondere etwa 0,02 Ohm aufweist.

19. Wabenkörper nach einem der vorhergehenden Ansprüche, **dadurch gekennzeichnet,** daß zumindest ein Teil der Tragstrukturen (13, 14, 15, 16; 53, 54, 55, 56) Bleche mit einer Dicke von 0,5 bis 1,5 mm, vorzugsweise etwa 1 mm, sind.

20. Wabenkörper nach einem der vorhergehenden Ansprüche, **dadurch gekennzeichnet,** daß die für weniger örtliche Stromstärke ausgelegten Tragstrukturen (4, 5; 44, 45) Bleche mit einer Dicke von 0,2 bis 0,8 mm, vorzugsweise etwa 0,5 mm sind.

21. Wabenkörper nach einem der vorhergehenden Ansprüche, **dadurch gekennzeichnet,** daß der Durchmesser des Wabenkörpers größer als der Abstand der Stirnseiten ist.

## Claims

1. A honeycombed body with two end faces, composed of at least partly structured metal sheets (7. 8; 47, 48) which are arranged in layer-wise manner and which form a plurality of passages through which a fluid can flow and which extend from the one end face to the other, wherein the honeycombed body is sub-divided by one or more areal gaps (9; 49) extending from one end face to the other, and/or is sub-divided by electrically insulating layers (20) in such a way that in each cross-sectional region the electrical conductivity of the honeycombed body is reduced, but at least one winding, electrically connecting conductive current path results which extends in the cross-sectional plane, characterised in that the metal sheets (7, 8, 47, 48) are held to mainly metal support structures (4, 5, 13, 14, 15, 16; 44, 45, 53, 54, 55, 56) extending at least partly inside the honeycombed body and extending at least sectionally parallel to the electrically insulating gaps (9; 49) and/or layers (20) or inside them. and the support structures (4. 5. 13, 14. 15, 16; 44, 45, 53, 54, 55. 56) are simultaneously designed as stabilising elements for the gaps (9; 49) and/or as carriers for the electrically insulating layers (20).

2. A honeycombed body according to Claim 1, characterised in that a first part of the support structures (13; 53) are connected together so that they are properly electrically conductive and are connected to a first connecting contact (11; 51) and a second part of the support structures (14; 54) are connected together so that they are properly electrically conductive and are connected to a second connecting contact (12; 52), wherein the first part of the support structures (13; 53) is connected electrically conductively to the second part of the support structures (14; 54) only by at least one current path running through the metal sheets (7, 8; 47, 48).

3. A honeycombed body according to Claim 1 or Claim 2. characterised in that the honeycombed body is arranged inside a tubular casing (1; 41), but is electrically insulated (10, 50) from it, and the metal sheets (7. 8; 47, 48) are only connected by the support structures (13, 14, 15, 16; 53, 54, 55, 56) mechanically to the tubular casing (1; 41).

4. A honeycombed body according to Claim 3, characterised in that the support structures (13, 14, 15, 16; 53, 54, 55, 56) are guided through the tubular casing (1; 41) in an electrically insulating way and/or are fixed thereto, preferably by form-locking connections.

5. A honeycombed body according to one of the preceding claims, characterised in that the metal sheets (7. 8; 47, 48) are arranged mainly in one or more stack(s) (6; 46) which are bent into an approximate S-shape.

6. A honeycombed body according to Claim 5, characterised in that the electrically insulating gaps (9; 49) and/or layers (20) are arranged in such a way that the resulting current path follows the stack(s) (6; 46) of metal sheets (7, 8; 47, 48) in a substantial S-shape one or more times.

7. A honeycombed body according to one of the preceding claims, characterised in that the metal sheets (7, 8; 47, 48) are fixed inside the honeycombed body to the support structures (13, 14. 15, 16; 53, 54, 55, 56), or make transitions into them, preferably at various angles less than 90°.

8. A honeycombed body according to one of the preceding claims, characterised in that the support structures (4, 5, 13, 14, 15, 16; 44, 45. 53, 54, 55, 56) have a local electrical resistance which is adapted to suit the local currents to be received, so that individual partial regions of the support structures (4, 5, 13, 14, 15, 16; 44, 45, 53, 54, 55, 56) can be of differing thickness.

9. A honeycombed body according to one of the preceding claims, characterised in that internally the honeycombed body is sub-divided electrically mainly by gaps (9; 49), but in partial regions is supported by electrically insulating layers (20).

10. A honeycombed body according to Claim 9, characterised in that the electrically insulating layers (20) are applied to one side, or to both sides, of the support structures (13, 14, 15, 16; 53, 54, 55, 56), preferably in the form of a flame-injected ceramics layer.

11. A honeycombed body according to Claim 5, 6, 7. 8. 9 or 10, characterised in that the honeycombed body is formed of a stack (6; 46). bent into an approximate S-shape, of metal sheets (7, 8; 47, 48), which, instead of, or parallel to a central metal sheet layer, contains a gap (9; 22; 49) or an electrically insulating layer (20), wherein all metal sheets are connected together in electrically conductive manner (15, 16; 55, 56) at a first end of the stack (6; 46), whilst at the other end of the stack (6; 46) the one half of the metal sheets (7, 8; 47, 48) is connected to a first connecting contact (11; 51) by way of a first carrying connecting structure (13; 53) on the one side of the central insulation (9; 20; 22; 49), and the other half of the metal sheets (7, 8; 47, 48) is connected on the other side of the central insulation (9; 20; 22; 49) by way of a second carrying connecting structure (14; 54) to a second connecting contact (12; 52).

12. A honeycombed body according to Claim 11, characterised in that the electrically conductive connection at the first end of the stack (6; 46) is formed by a carrying bridging structure (15. 16; 55, 56) which is fixed to (17, 57), or which bears against, the tubular casing (1; 41) in electrically insulating manner.

13. A honeycombed body according to one of the preceding claims, characterised in that the support structures in the partial regions (13. 14, 15, 16; 53, 54, 55, 56) extend around a plurality of layers of metal sheets (7, 8; 47, 48) in the manner of a strap for the purpose of making an electrical contact.

14. A honeycombed body according to one of the preceding claims, characterised in that the support structures (14, 15; 54, 55), at least in part regions, preferably part regions very remote from the outer periphery of the honeycombed body, have reinforcement tabs (61, 62, 63, 64; 71, 72; 81, 82) which project over one or two end face(s) of the honeycombed body and which do not touch the end face(s), the reinforcement tabs bearing (72, 74) on one another and/or on the tubular casing (1; 41) in electrically insulating manner.

15. A honeycombed body according to one of the preceding claims, characterised in that the metal sheets (7, 8; 47, 48) are alternately arranged as smooth (7; 47) and corrugated (8; 48) metal sheets, in particular made of a high temperature rust-resistant steel.

16. A honeycombed body according to one of the preceding claims, characterised in that the metal sheets (7, 8; 47, 48) are alternately arranged metal sheets which vary in terms of being corrugated or structured.

17. A honeycombed body according to one of the preceding claims, characterised in that the honeycombed body is used for purifying exhaust gases, in particular for motor vehicles with Otto engines, and is, or can be, coated with catalytically active material.

18. A honeycombed body according to one of Claims 2 to 17, characterised in that at 20°C the honeycombed body has an electrical resistance between the first (11; 51) and the second (12; 52) connecting contact of 0.01 to 0.3 Ohm, preferably 0.025 to 0.1 Ohm, in particular about 0.02 Ohm.

19. A honeycombed body according to one of the preceding claims, characterised in that at least a part of the support structures (13, 14, 15. 16; 53, 54, 55, 56) are metal sheets of a thickness of between 0.5 and 1.5 mm, preferably about 1 mm.

20. A honeycombed body according to one of the preceding claims, characterised in that the support structures (4. 5; 44. 45) which are designed for local currents of smaller magnitude are metal sheets of a thickness of 0.2 to 0.8 mm, preferably about 0.5 mm.

21. A honeycombed body according to one of the preceding claims, characterised in that the diameter of the honeycombed body is greater than the distance of the end faces.

## Revendications

1. Corps alvéolaire avec deux faces frontales, construit à partir de tôles (7, 8 ; 47, 48) configurées par couches et au moins partiellement structurées qui forment une pluralité de canaux traversables par un fluide qui s'étendent d'une face frontale à l'autre, le corps alvéolaire étant subdivisé par un ou plusieurs interstices aplatis (9; 49) et/ou couches électriquement isolantes (20) s'étendant dans la direction allant d'une face frontale à l'autre de manière telle que dans chaque région en section droite la conductibilité électrique du corps alvéolaire soit moindre, tout en procurant au moins un chemin de courant sinueux et électriquement continu s'étendant dans le plan de section, **caractérisé** **en ce que** les tôles (7, 8, 47, 48) sont maintenues sur des structures support (4, 5, 13, 14, 15, 16 ; 44, 45, 53, 54, 55, 56) principalement métalliques s'étendant au moins en partie à l'intérieur du corps alvéolaire, qui, au moins en section, s'étendent parallèlement aux interstices (9 ; 49) et/ou couches (20) électriquement isolants ou, respectivement, dans ces derniers, et les structures support (4, 5, 13, 14, 15, 16 ; 44, 45, 53, 54, 55, 56) sont construites à la fois sous forme de stabilisateurs des interstices (9 ; 49) et/ou comme supports des couches électriquement isolantes (20).

2. Corps alvéolaire selon la revendication 1, **caractérisé** **en ce qu**'une première partie des structures support (13 ; 53) est reliée en bonne conduction électrique mutuelle et avec un premier contact de raccordement (11 ; 51) et une seconde partie des structures support (14 ; 54) est reliée en bonne conduction électrique mutuelle et avec un second contact de raccordement (12 ; 52), la première partie des structures support (13 ; 53) n'étant reliée en conduction électrique avec la seconde partie des structures support (14; 54) que par l'intermédiaire d'au moins un chemin de courant s'étendant au travers des tôles (7, 8 ; 47, 48).

3. Corps alvéolaire selon la revendication 1 ou 2, **caractérisé en ce que** le corps alvéolaire est disposé à l'intérieur d'un manchon tubulaire (1 ; 41), mais en étant électriquement isolé de celui-ci, et les tôles (7, 8 ; 47, 48) ne sont reliées mécaniquement avec le manchon tubulaire (1 ; 41) que par l'intermédiaire des structures support (13, 14, 15, 16 ; 53, 54, 55, 56).

4. Corps alvéolaire selon la revendication 3, **caractérisé** **en ce que** les structures support (13, 14, 15, 16 ; 53, 54, 55, 56) traversent avec isolement électrique le manchon tubulaire (1 ; 41) et/ou sont fixées à celui-ci, de préférence par l'intermédiaire de liaisons terminales formées.

5. Corps alvéolaire selon l'une des revendications précédentes, **caractérisé en ce que** les tôles (7, 8 ;47, 48) sont configurées de façon générale en un ou plusieurs empilements (6 ; 46) courbés en forme approximative de S.

6. Corps alvéolaire selon la revendication 5, **caractérisé** **en ce que** les interstices (9 ; 49) et/ou couches (20) électriquement isolants sont configurés de telle manière que le chemin de courant résultant suive de façon générale une ou plusieurs fois le ou les empilement(s) (6 ; 46) des tôles (7, 8 ; 47, 48).

7. Corps alvéolaire selon l'une des revendications précédentes, **caractérisé en ce que** les tôles (7, 8 ; 47, 48) sont fixées à l'intérieur du corps alvéolaire aux structures support (13, 14, 15, 16; 53, 54, 55, 56) ou, respectivement, présentent une transition avec celles-ci, de préférence en formant des angles différents de 90°.

8. Corps alvéolaire selon l'une des revendications précédentes, **caractérisé en ce que** les structures support (4, 5, 13, 14, 15, 16 ; 44, 45, 53, 54, 55, 56) ont une résistance électrique locale adaptée à l'intensité locale de courant reçue de telle manière que des régions partielles distinctes des structures support (4, 5, 13, 14, 15, 16 ; 44, 45, 53, 54, 55, 56) puissent avoir des épaisseurs différentes.

9. Corps alvéolaire selon l'une des revendications précédentes, caractérisé e n ce que la subdivision à l'intérieur du corps alvéolaire résulte principalement des interstices (9 ; 49), en étant cependant confortée dans des régions partielles par des couches électriquement isolantes (20).

10. Corps alvéolaire selon la revendication 9, **caractérisé** **en ce que** les couches électriquement isolantes (20) sont appliquées d'un côté ou des deux côtés des structures support (13, 14, 15, 16 ; 53, 54, 55, 56), de préférence sous la forme d'une couche céramique vaporisée à la flamme.

11. Corps alvéolaire selon la revendication 5, 6, 7, 8, 9 ou 10, **caractérisé en ce que** le corps alvéolaire est constitué d'un empilement (6 ; 46) courbé approximativement en forme de S de tôles (7, 8 ; 47, 48), qui comporte, à la place d'une couche de tôle médiane ou parallèlement à celle-ci, un interstice (9 ; 22 ; 49) ou une couche électriquement isolante, toutes les tôles étant reliées (15, 16 ; 55, 56) les unes aux autres en conduction électrique à une première extrémité de l'empilement (6 ; 46), tandis qu'à l'autre extrémité de l'empilement (6 ; 46) une moitié des tôles (7, 8 ; 47, 48) est reliée d'un côté de l'isolation médiane (9, 20 ; 22 ; 49) par l'intermédiaire d'une première structure de raccordement portante (13 ; 53) à un premier contact de raccordement (11 ; 51) et l'autre moitié des tôles (7, 8 ; 47, 48) est reliée de l'autre côté de l'isolation médiane (9, 20 ; 22 ; 49) par l'intermédiaire d'une seconde structure de raccordement portante (13 ; 53) à un second contact de raccordement (11 ; 51).

12. Corps alvéolaire selon la revendication 11, **caractérisé** **en ce que** la liaison électriquement conductrice à la première extrémité de l'empilement (6 ; 46) est formée par une structure de jonction (15, 16 ; 55, 56) qui est fixée (17 ; 57) ou appliquée sur le manchon tubulaire (1 ; 41) en relation d'isolement électrique.

13. Corps alvéolaire selon l'une des revendications précédentes, **caractérisé en ce que** les structures support comportent en bec dans des régions partielles (13, 14, 15, 16; 53, 54, 55, 56) respectivement plusieurs couches de tôles (7, 8 ; 47, 48) pour la mise en contact électrique.

14. Corps alvéolaire selon l'une des revendications précédentes, **caractérisé en ce que** les structures support (14, 15 ; 54, 55), au moins dans des régions partielles, de préférence dans des régions partielles se situant loin de la périphérie externe du corps alvéolaire, comportent des lobes de renforcement (61, 63, 63, 64 ; 71, 72 ; 81, 82) dépassant une ou les deux face(s) frontale(s) du corps alvéolaire et ne reposant pas sur le corps alvéolaire, et qui sont appliqués (72, 74) mutuellement entre eux et/ou sur le manchon tubulaire (1 ; 41) en relation d'isolement électrique.

15. Corps alvéolaire selon l'une des revendications précédentes, **caractérisé en ce que** les tôles (7, 8 ; 47, 48) sont des tôles lisses (7, ; 47) et ondulées (8 ; 48) configurées de façon alternée, en particulier en acier résistant à la corrosion à haute température.

16. Corps alvéolaire selon l'une des revendications précédentes, **caractérisé en ce que** les tôles (7, 8 ; 47, 48) sont de tôles différemment ondulées ou structurées configurées de façon alternée.

17. Corps alvéolaire selon l'une des revendications précédentes, **caractérisé en ce que** le corps alvéolaire sert pour l'épuration de gaz, en particulier pour des véhicules à moteur à explosion, et est revêtu ou peut être revêtu d'un matériau catalytiquement actif.

18. Corps alvéolaire selon l'une des revendications 2 à 17, **caractérisé en ce que** le corps alvéolaire présente à 20°C entre le premier (11 ; 51) et le second (12 ; 52) contact de raccordement une résistance électrique de 0,01 à 0,3 Ω, de préférence de 0,025 à 0,1 Ω, en particulier d'environ 0,02 Ω.

19. Corps alvéolaire selon l'une des revendications précédentes, **caractérisé en ce qu**'au moins une partie des structures support (13, 14, 15, 16 ; 53, 54, 55, 56) sont des tôles avec une épaisseur de 0,5 à 1,5 mm, de préférence d'environ 1 mm.

20. Corps alvéolaire selon l'une des revendications précédentes, **caractérisé en ce que** les structures support (4, 5 ;44, 45) prévues pour une moindre intensité locale de courant sont des tôles avec une épaisseur de 0,2 à 0,8 mm, de préférence d'environ 0,5 mm.

21. Corps alvéolaire selon l'une des revendications précédentes, **caractérisé en ce que** le diamètre du corps alvéolaire est supérieur à l'écartement entre faces frontales.
